# EUROPEAN PATENT APPLICATION

(11) **EP 2 916 092 A1**
(43) Date of publication of application: **09.09.2015**
(21) Application number: 15000614.6
(22) Date of filing: 03.03.2015
(51) Int. Cl.: F28D 7/16, F01N 5/02, F24D 11/00, F28D 20/00, F28D 20/02

(54) **THERMAL ENERGY RECOVERY APPARATUS AND METHOD**

(30) Priority: 03.03.2014 GB 201403859
(71) Applicant: PSJ Technology Limited, Northamptonshire NN12 6JG (GB)
(72) Inventor: Thomason, John Andrew, Flore, Northamptonshire NN7 4LZ (GB); Byrd, Patrick Maxwell, Northampton, NN4 0SS (GB); Porter, Stephen George, Towcester, Northamptonshire NN12 6JG (GB)
(74) Representative: Franks & Co (South) Limited

(57) **Abstract**

A thermal energy recovery apparatus (1, 22, 31) comprises a thermal store (9, 29) containing phase change material (PCM). When the thermal energy recovery apparatus (1, 22, 31) is mounted to a motor vehicle, exhaust gases from its engine (2) are passed through channels (10, 30) in the thermal store (9, 29) and the PCM absorbs heat from the gases. Heat from the thermal store (9, 29) is subsequently recovered by passing a heat transfer fluid such as water through a jacket (13), enclosing the thermal store (9), and through ducts (16, 30) extending through the thermal store (9, 29). The heat transfer fluid may for example be used to provide heat for a domestic central heating or hot water system.

## Description

The present invention relates to the field of recovery and utilisation of thermal energy that would otherwise go to waste. More particularly but not exclusively, it relates to apparatus and a method for recovering thermal energy from exhaust gases of a combustion engine and storing it for subsequent use, for example in heating buildings.

Internal combustion engines, such as those commonly used to power motor vehicles, convert only a relatively small proportion of the energy produced by consuming their fuel into useful kinetic energy of the vehicle. 70% or more of the energy from the fuel could be dissipated as heat.

Some of this heat is removed from the engine by passing liquid coolant through the engine and through a radiator, from which the heat is radiated to the atmosphere; a small proportion of this heat may usefully be diverted to an internal heating system for the vehicle's passenger compartment. Some heat is also removed in a similar manner via the engine oil.

Much of the heat generated by combustion of the fuel remains in the high-temperature gaseous products of combustion, which are ejected through the exhaust system into the atmosphere. This energy is wasted, and in some regions with high concentrations of such engines may even affect local climatic conditions.

Some of the heat is carried away from hot parts of the engine, including its exhaust system, mainly by air convection.

Even for electrically-powered vehicles, particularly those ultimately powered by hydrogen/oxygen fuel cells, there will still be a substantial wastage of heat, including in waste exhaust gases and vapours.

Similar issues will arise for internal and external combustion engines in other applications, such as electrical generators. However, for most individuals, energy wastage from their motor vehicles will be a major environmental issue, even before the financial cost of the fuel wasted as exhaust heat is taken into account.

There has hence been considerable interest in systems for collecting thermal energy from engines, such as those in motor vehicles, and storing it for subsequent use. Some of these ideas are focused only on storing the relatively small amounts of thermal energy needed to heat a vehicle's passenger compartment or to pre-heat the engine before starting in cold weather. More ambitious systems store larger quantities of thermal energy for subsequent use external to the vehicle, such as heating a hot water supply for a building. Most such systems store thermal energy from the coolant system or exhaust system of the engine of a vehicle in a storage medium, such as a water or water/glycol blend. Such aqueous media have a relatively high heat capacity and low cost. However, their thermal capacity is restricted by the upper limits on the temperatures that they can reach, for example before the water begins to boil.

Additionally, a limitation of thermal storage systems for vehicles is that they may constitute a significant addition to the mass of the vehicle, and transporting this additional mass will potentially raise the energy needed to power the vehicle, thus affecting fuel consumption.

The mass of the thermal storage system for a vehicle should thus be kept to a minimum. Also, the space available in a vehicle is usually restricted, requiring the thermal energy system to be as small as possible and to compete for useful space with other components as little as possible.

The thermal energy that may usefully be stored in a thermal storage medium is a product of its mass, the temperature changes involved and the specific heat of the thermal storage medium. Where mass is at a premium, high specific heats and high maximum working temperatures are therefore preferred. Since heat transfer across small temperature differentials tends to be inefficient, high maximum working temperatures also tend to allow more of the thermal energy to be delivered from the thermal storage medium to the entity to be heated.

It has also been shown to be beneficial to employ a thermal storage medium that undergoes a phase change within the working temperature range. Significant quantities of latent heat associated with the phase change will thus be stored, to be delivered from the storage medium as it cools through the phase change temperature.

European Patent Application No. EP1426601 discloses apparatus and methods for conserving thermal energy produced in a vehicle's engine, by means of a thermal store that can operate at up to 400°C.

However, once stored, the thermal energy must also be efficiently delivered to a desired entity which is to be heated. EP1426601 discloses a heat transfer arrangement in which a block of a thermally conductive material, ideally a metal, is releasably clamped around the thermal store, so that it can absorb heat therefrom by conduction. A heat transfer fluid is then passed through pipes within the block to absorb heat from the block and to pass it on to the entity to be heated.

Specifically, EP1426601 discloses a system in which the block is connected by an extended fluid transfer circuit to a hot water tank of a domestic building (for example). The block is only clamped to the thermal store when the vehicle is parked and thermal energy is to be transferred to the hot water tank (or the like). The vehicle is "docked" with the block and its fluid transfer circuit until sufficient thermal energy has been delivered.

This system requires the thermal store on the vehicle to be openly accessible so that the block can be clamped to it. This could have the result that the thermal store could lose significant amounts of thermal energy by radiation or convection. Additionally, it has been found that thermal contact between the block and the thermal store is often poor, since the respective metal surfaces would be rough on the microscopic scale (unless specially prepared), and so direct metal-to-metal contact is relatively restricted, even before the metal surfaces become coated with oil, mud, grime or other ambient pollutants.

Attempts have been made to re-engineer such a system to improve its effectiveness, for example as disclosed in co-pending UK Patent Application No. 1217148.4. However, the systems disclosed therein are still not optimal in all respects, and so it would be desirable to devise alternative systems having a superior balance of properties.

It is hence an object of the present invention to provide a high-temperature thermal storage apparatus for a vehicle, and a method for its operation, that obviate the drawbacks of existing apparatus and methods, and which preferably are also cheaper and simpler to produce and operate.

According to a first aspect of the present invention, there is provided thermal energy storage apparatus comprising heat input means, heat output means and thermal store means comprising a thermal energy storage medium, wherein the heat input means is operatively connectable to engine means so that a high-temperature fluid from the engine means is delivered to the thermal store means and thermal energy is transferred from the high-temperature fluid to the thermal energy storage medium, and wherein the heat output means comprises enclosure means substantially surrounding the thermal store means, a heat transfer fluid being selectably passable through the heat output means to absorb thermal energy from the thermal energy storage medium, and said heat output means comprises inlet and outlet means operatively connected or connectable to an entity that is to be heated.

The heat input means and the heat output means may be separately operatively connected to the thermal store means.

The heat input means and the heat output means may together comprise at least one common portion operatively connected to the thermal store means.

Preferably, said heat transfer fluid removes thermal energy from the thermal store means primarily by convection, optionally by forced convection.

The engine means may comprise combustion engine means.

In a preferred embodiment, the heat input means is operatively connectable to exhaust means of the combustion engine and the high-temperature fluid then comprises exhaust gases from the combustion engine.

The thermal energy storage apparatus is preferably mountable to a powered vehicle and operatively connectable to an engine thereof.

Alternatively, the thermal energy storage apparatus may be operatively connected or connectable to a stationary combustion engine.

Advantageously, the entity to be heated comprises an element or portion of the vehicle.

Alternatively, the entity to be heated is separate from the vehicle.

The entity to be heated may comprise a source of space heating for a building or mobile structure, or a source of heatable water for domestic or commercial use.

The entity to be heated may comprise second thermal store means.

The heat transfer fluid is preferably driven through the heat output means.

Optionally, the heat transfer fluid is driven through the heat output means by pump means.

The thermal energy storage apparatus may comprise a reservoir of said heat transfer fluid, and means to pass the heat transfer fluid from the reservoir to the heat output means.

Optionally, said reservoir may be located adjacent the entity to be heated.

Preferably, the heat transfer fluid comprises a liquid.

Advantageously, said liquid comprises water.

Optionally, said liquid comprises a mixture of water and glycol, such as ethylene glycol.

Preferably, the inlet and outlet means of the heat output means are so arranged that said liquid drains from the heat output means under gravity.

Alternatively, the liquid is removable from the heat output means by pumping or by driving it out with compressed air.

Alternatively, the heat transfer fluid comprises a gas.

Advantageously, said gas comprises air.

The thermal energy storage medium may comprise a phase change material (PCM).

Optionally, the PCM comprises a material having a melting point within an operational temperature range of the thermal store means.

The thermal store means may have a maximum operating temperature of 200°C or greater, optionally of up to 300°C.

The thermal store means may optionally have a maximum operating temperature of up to 400°C, ideally of up to 500°C.

The heat input means may comprise selectably operable diversion means to divert the high-temperature fluid from the engine means away from the thermal store means.

The diversion means may be automatically operable when a temperature of the thermal store means exceeds a current temperature of the high-temperature fluid from the engine means.

Alternatively or additionally, said diversion means may be automatically operable when the thermal store means reaches a predetermined temperature.

According to a second aspect of the present invention, there is provided a method of storing and delivering thermal energy comprising the steps of: providing thermal energy storage apparatus as described in the first aspect above; connecting heat input means of said apparatus to engine means; operating said engine means such that thermal energy from high-temperature fluid from the engine means is transferred to the thermal store means; passing heat transfer fluid through heat output means of the apparatus such that thermal energy is transferred from the thermal store means to the heat transfer fluid; and then passing said heat transfer fluid to an entity to be heated.

Preferably, the method further comprises the step of operatively connecting the heat output means of the apparatus to the entity to be heated, prior to passage of the heat transfer fluid through the heat output means.

Advantageously, operation of the engine is halted prior to passage of the heat transfer fluid through the heat output means.

The engine means may comprise combustion engine means.

Embodiments of the present invention will now be more particularly described by way of example and with reference to the accompanying drawings, in which:
Figure 1 is a schematic elevation of a thermal energy recovery unit embodying the present invention, mounted in an exhaust system of a motor vehicle;
Figure 2 is a schematic cross-section of the thermal energy recovery unit of

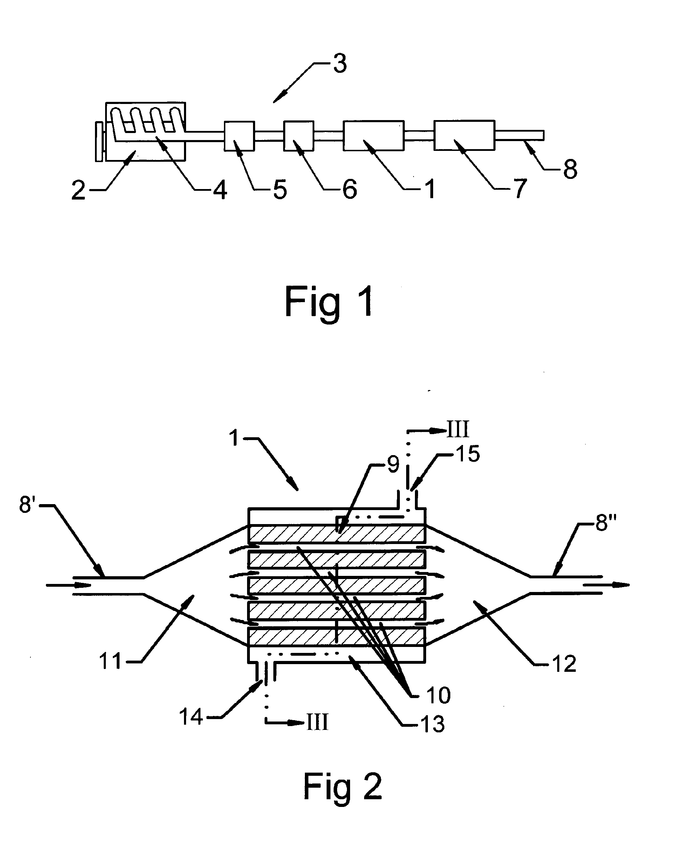

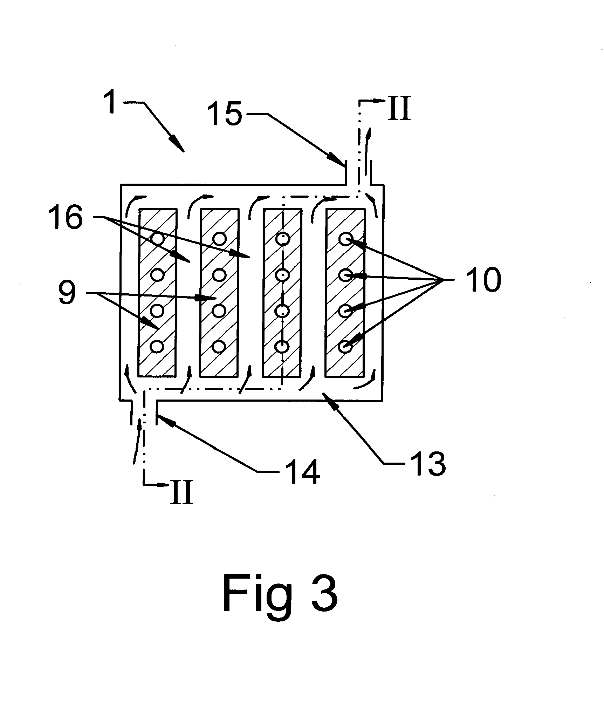

Figure 1 taken along line II-II of Figure 3;
Figure 3 is a schematic cross-section of the thermal energy recovery unit of Figure 1 taken along line III-III of Figure 2;

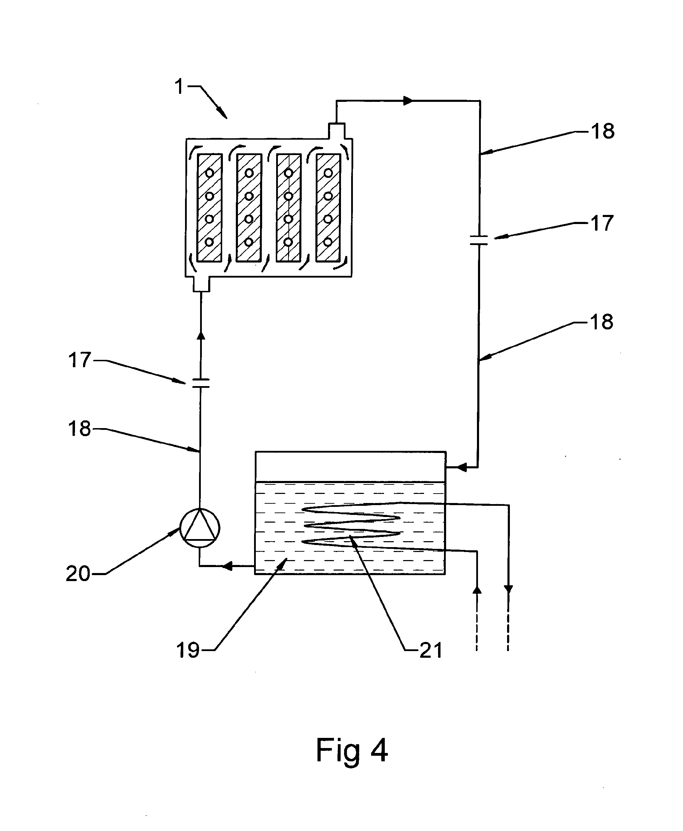

Figure 4 is a schematic diagram of a first thermal energy recovery system including the thermal energy recovery unit of Figure 1;

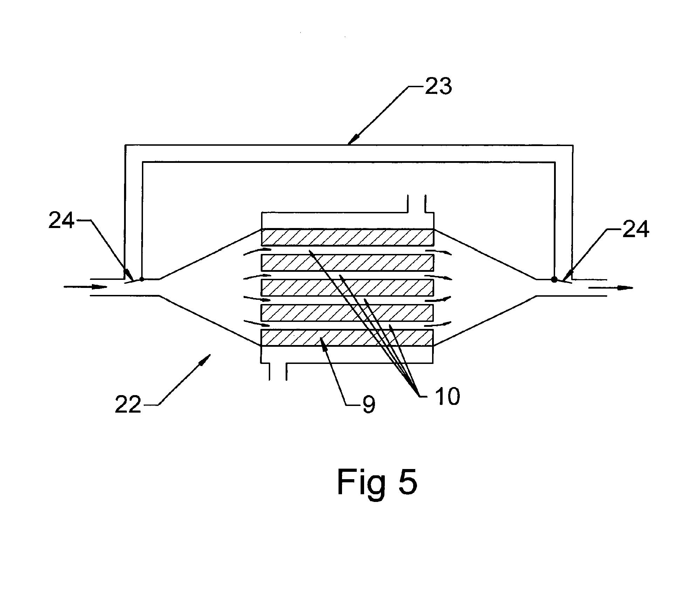

Figure 5 is a schematic cross-section of a second thermal energy recovery unit embodying the present invention, fitted with a by-pass arrangement;

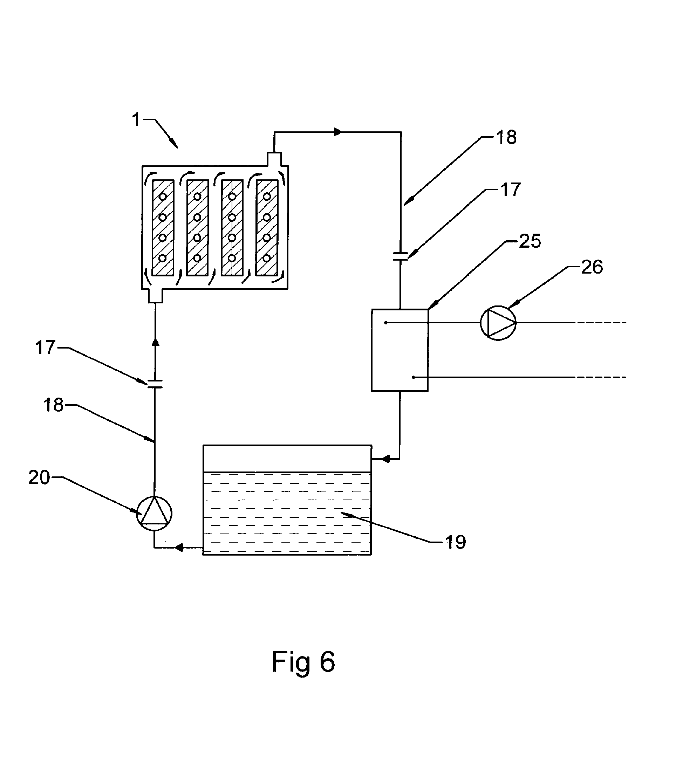

Figure 6 is a schematic diagram of a second thermal energy recovery system including the thermal energy recovery unit of Figure 1; and

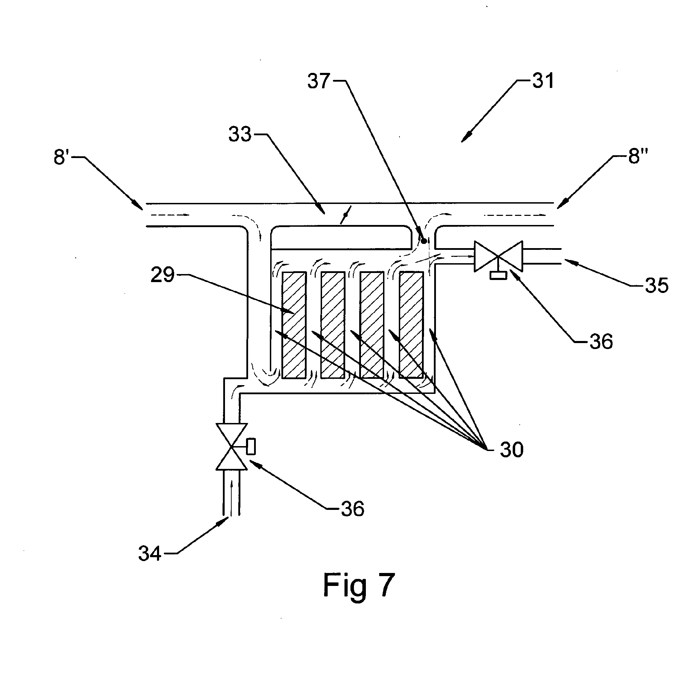

Figure 7 is a schematic cross-section of a third thermal energy recovery unit embodying the present invention.

Referring now to the Figures and to Figure 1 in particular, a first thermal energy recovery unit 1 embodying the present invention is shown in schematic form, installed in the exhaust system 3 of an internal combustion engine 2 of a motor vehicle (omitted for clarity). Thermal energy recovery apparatus embodying the present invention is usable in conjunction with a wide range of engines and motors, both in vehicles and stationary. All that is required is that the engine, etc, emits a flow of a hot fluid (typically exhaust gases, although other gases, vapours and liquids are also envisaged as being usable in other embodiments of the present invention), and that this hot fluid can be led to the thermal energy recovery unit 1.

In this particular case, the thermal energy recovery unit 1 is located downstream of an exhaust manifold 4 of the engine 2, a catalytic converter unit 5, and a diesel particulate filter (DPF) 6 (in the case of a diesel engine) and upstream of a silencer 7, with conventional exhaust piping 8 connecting them in series as shown. High-temperature exhaust gases from the engine 2 would conventionally be passed through the catalytic converter unit 5, the DPF 6, and the silencer 7, then out to atmosphere, where the thermal energy contained in the exhaust gases would all go to waste. The thermal energy recovery unit 1 instead extracts a significant proportion of this thermal energy from the exhaust gases before they are emitted, as described below.

The thermal energy recovery unit 1 is shown in more detail in Figures 2 and 3. At the core of the unit 1 is a thermal store 9. The thermal store 9 comprises a volume of a phase change material having a melting point in the temperature range between about 100°C and 300°C, which is held in a metal canister.

A plurality of cylindrical channels 10 extend through the thermal store 9, between an inflow plenum 11 and an outflow plenum 12. The inflow plenum 11 is connected by a first section of exhaust piping 8' to the catalytic converter 5 and/or the DPF 6, and thence to the exhaust manifold 4 of the engine 2, while the outflow plenum 12 is connected by a second section of exhaust pipe 8" to the silencer 7.

The thermal store 9 is surrounded by a hollow sleeve 13 or jacket, provided with at least one inlet 14 and at least one outlet 15, the functions of which are described in detail below.

High temperature exhaust gases from the engine 2 thus enter the thermal energy recovery unit 1 along exhaust pipe 8'. The exhaust gases then flow from the inflow plenum 11, through the multiple channels 10 in the thermal store 9, into the outflow plenum 12 and out of the unit 1 along exhaust pipe 8". As the exhaust gases pass along the channels 10, they transfer much of their thermal energy to the phase change material (PCM) in the thermal store 9.

This thermal energy raises the temperature of the PCM, until it reaches its melting point. Further thermal energy is then absorbed as latent heat as the PCM melts; once the PCM is molten, further thermal energy raises its temperature once more. The magnitude of the latent heat of melting for the PCM is such that the total stored thermal energy per unit volume is potentially far higher than for material that does not undergo a phase change within the operating temperature range. (For a typical internal combustion engine in a modern motor vehicle, the exhaust gases may be at around 250°C during low-speed travel, e.g. in urban driving, but around 400°C when the engine is under a greater load, e.g. at high speed on a motorway). The PCM is therefore chosen to have as large a latent heat per unit mass as possible, with a melting point above ambient temperatures but below 250°C, ideally below 200°C. A significant proportion of thermal energy from the exhaust gases is thus absorbed by the thermal store 9 and less thermal energy is wasted as the exhaust gases are vented to the atmosphere.

Alternatively the thermal store 9 may comprise other heat-absorbing materials. For example, materials similar to the solid blocks/bricks of magnetite that are used in domestic electrical storage heaters. These materials are likely to be cheaper, but would almost certainly have a lower thermal capacity per unit weight over the temperature ranges used. In a system as described above for mounting to a vehicle, the higher thermal capacity per unit weight of a PCM would be preferable, but for stationary applications where weight limitations are not as important, bricks or the like might well be more cost-effective.

Another method may include chemical thermal storage systems, that change state when heated and cooled.

In Figure 3, the thermal energy recovery unit 1 is shown in a schematic section transverse to that shown in Figure 1. (The channels 10 through the thermal store 9 are thus shown in cross-section). The thermal store 9 is not just enclosed by the jacket/sleeve 13, but is also provided with multiple ducts 16 extending through it, in close thermal contact with the PCM volume within the thermal store 9. (In other embodiments, the ducts 16 and channels 10 might be parallel, but a transverse alignment is shown in this example to distinguish them more clearly).

A heat transfer fluid can thus be passed through the ducts 16 to pick up thermal energy from the thermal store 9. In the embodiment shown, the heat transfer fluid used is water, although in other embodiments other liquids may be used. For example, water/glycol mixtures may be used where freezing might be a problem while the apparatus is not in use. Gaseous heat transfer media may also be suitable for further embodiments.

When water and other liquids are used as the heat transfer fluid, the jacket/sleeve 13 and the ducts 16 would normally remain empty of heat transfer fluid while the engine 2 is running and the thermal store 9 is picking up thermal energy from the exhaust gases (etc), since the temperature of the PCM in the thermal store 9 is likely to exceed the boiling point of such liquids, particularly aqueous liquids. Where gaseous heat transfer media are used, the jacket/sleeve 13 and ducts 16 can usually be left with residual heat transfer medium present, without major problems.

It is found in practice that when a heat transfer liquid is first introduced into contact with the heated thermal store 9, there can be a brief initial thermal shock and localised boiling of the liquid. However, once a flow of heat transfer liquid through the thermal store 9 has been established, this no longer occurs, and thermal energy is transferred steadily and continuously into the heat transfer liquid.

In normal operation (as described in more detail below with reference to Figure 4), water or other heat transfer fluid is passed through the jacket/sleeve 13 and the ducts 16, from inlet 14 to outlet 15, absorbing thermal energy as it goes. The apparatus of the present invention thus recovers thermal energy from the thermal store 9 of the thermal energy recovery unit 1 by convection.

Since this water or other heat transfer fluid is usually pumped through the thermal energy recovery unit 1, this could further be classified as forced convection.

The heat transfer fluid that has picked up thermal energy and departed the thermal energy recovery unit 1 can then be used as a source of heat in a wide range of applications. An arrangement for using this thermal energy in a domestic/residential hot water system is shown in Figure 4.

In Figure 4, the motor vehicle (not shown) has been in use, and a significant charge of thermal energy has been collected in its thermal energy recovery unit 1. The motor vehicle has been parked, for example in a garage, which is equipped with further components of a thermal energy recovery system. Releasable couplings 17 are provided to connect the thermal energy recovery unit 1 on the vehicle to a fluid transfer circuit 18. The fluid transfer circuit 18 also comprises a water tank or reservoir 19 and a pump 20.

The fluid transfer circuit 18 takes water from the reservoir 19, and pumps it through the thermal energy recovery unit 1 and back to the reservoir 19 at a significantly higher temperature. This can be continued until all available thermal energy has been extracted from the thermal store 9, or until the water in the reservoir 19 has reached a desired temperature.

The reservoir 19 of hot water may then be used to heat water for a hot tank of a domestic water system and/or to heat water for a central heating system. A standard heat transfer coil 21 is shown, for this purpose.

In Figure 4, the fluid transfer circuit 18 and the reservoir 19 are deliberately shown at a lower level than the thermal energy recovery unit 1 on the motor vehicle. This is to help to ensure that, once recovery of thermal energy from the thermal store 9 is complete and the pump 20 is switched off, all the water will flow down out of the thermal energy recovery unit 1, under gravity into the reservoir 19. In the embodiment shown, the couplings 17 and the reservoir 19 need to be located at a lower level than the thermal energy recovery unit 1, so that the water can empty fully out of the thermal energy recovery unit 1. (If this is not possible, alternative means should be used to empty the water thoroughly from the thermal energy recovery unit 1, such as a pump, or an air compressor to drive the water out of the thermal energy recovery unit 1 and back to the reservoir 19.) It would hence be convenient to locate the couplings 17 near a floor level of the garage, etc, and to locate the reservoir 19 slightly below floor level.

In alternative embodiments, (not shown) the reservoir 19 may be mounted on the vehicle itself, in which case the couplings 17 would be omitted or replaced by non-return valves, leaving the reservoir 19 permanently physically connected to the thermal energy recovery unit 1. (NB: the reservoir 19 would still be operatively connected thereto only when the engine 2 is off). This would provide a large reserve of heated water on the vehicle, possibly to augment a heating system for a passenger compartment, or possibly to keep the engine 2 from freezing up when not in use. This can be a major problem in high latitudes; the engines of motor vehicles in use in Arctic conditions are frequently run continuously to avoid coolants, lubricants and even fuel freezing. Recovery and use of waste heat from the exhaust gases would avoid or reduce these problems without wasting further fuel and causing unnecessary engine wear. Similar systems would be useful to recover and use waste heat to heat and/or provide hot water for a caravan or the like.

A further feature likely to be useful in a thermal energy recovery unit is illustrated schematically in Figure 5. A second thermal energy recovery unit 22 is substantially identical to the first thermal energy recovery unit 1 shown in Figures 1-4, except for the additional presence of a bypass channel 23 and two controllable valves 24.

As mentioned above, exhaust gases from a conventional vehicle internal combustion engine can reach temperatures of 500°C when the vehicle is travelling at high speeds, but at lower speeds might only reach 250°C. Thus, if the vehicle has been on a high-speed run, the thermal store 9 is likely to be at a temperature close to 400°C. If the vehicle is then driven more slowly for a significant length of time, the exhaust gases passing through the channels 10 in the thermal store 9 will actually be cooler than the thermal store 9 and may absorb thermal energy from the PCM.

Therefore, a bypass channel 23 is provided, having a respective valve 24 located adjacent each end of the bypass channel 23 controlling access thereto by the exhaust gases. When the valves 24 are opened, the exhaust gases will follow the bypass channel 23 in preference to the channels 10 through the thermal store 9. The thermal store 9 will hence not be drained of part of its stored thermal energy by the (relatively) cool exhaust gases. Temperature sensors and a control system for the valves 24 may be provided, or the valves 24 may be controlled by a suitably programmed engine management system of the vehicle, based on its recent driving history. The bypass channel 23 may also be operated to avoid overheating of the thermal store 9 when travelling at high speed. The second thermal energy recovery unit 22 is therefore preferable to the first thermal energy recovery unit 1 if the respective engine 2 is likely to be operated at varying speeds, while the first thermal energy recovery unit 1 may suffice when the respective engine 2 would operate substantially at a constant speed (for example if the engine 2 is part of a stationary generator set).

Figure 6 shows an alternative thermal energy recovery system to that shown in Figure 4 and described above. The releasable couplings 17, fluid transfer circuit 18, reservoir 19 of water and pump 20 are substantially the same as shown in Figure 4. However, instead of using a heat transfer coil 21 within the reservoir 19 to extract useful heat, this system is provided with a conventional plate heat exchanger 25, fitted directly in-line in the fluid transfer circuit 18. The plate heat exchanger 25 is provided with its own pump 26 to circulate its own heat transfer fluid through the plate heat exchanger 25. Thus, thermal energy may be taken directly from the system, rather than waiting until water in the reservoir 19 has come fully up to temperature.

Figure 7 shows a third thermal energy recovery unit 31 embodying the present invention. In this alternative arrangement, the thermal store 29 has only a single set of channels 30 passing through it, rather than separate sets of channels 10 for the exhaust gases and ducts 16 for the heat transfer fluid, as in the case of the thermal store 9 of Figures 2, 3, 4, 5 and 6 above.

When the engine 2 (not shown) is in operation, its exhaust gases (broken lines) enter the thermal energy recovery unit 31 along exhaust pipe 8'. A bypass channel 33 is provided, similar to the bypass channel 23 of the second thermal energy recovery unit 22 of Figure 5, which is opened to allow the exhaust gases to pass around the thermal energy recovery unit 31, when they might be at too low a temperature to contribute thermal energy to the thermal store 29, or if there might be a risk of the thermal store 29 overheating. Normally, however, the exhaust gases are led to lower ends of the channels 30 which extend generally vertically through the thermal store 29.

As the exhaust gases pass upwards through the channels 30, they will give up thermal energy to the volume of thermal storage material within the thermal store 29, as described above for the other thermal energy recovery units 1, 22. The exhaust gases then pass out of the thermal energy recovery unit 31 along exhaust pipe 8".

The thermal energy that has built up in the PCM volume of the thermal store 29 is then harvested by passing a heat transfer fluid, typically water, through the same channels 30 that were used for the exhaust gases. A fluid inlet 34 and a fluid outlet 35 are provided, optionally being isolable by valves 36.

The fluid inlet 34 is ideally located generally below the thermal store 29, allowing water or other heat transfer fluid to be introduced to the lower ends of the channels 30 and to fill and flow upwardly there-through. This water or other heat transfer fluid will pick up thermal energy from the thermal store 29, and will be led away from an upper end of the channels 30 via the fluid outlet 35.

In order to avoid water or other heat transfer fluid entering the exhaust system 3, a water level sensor 37 is located in the passage through which the exhaust gases would flow to the exhaust pipe 8". If water or other heat transfer fluid reaches this level sensor 37, the flow through the thermal energy recovery unit 31 may be restricted or cut-off, to ensure that all of the water or other heat transfer fluid leaves through the fluid outlet 35, and does not contaminate/corrode the exhaust pipe 8", or even travel back up the exhaust system 3. After use, remaining water or other heat transfer fluid can be allowed to flow back out of the thermal energy recovery unit 31 through the fluid inlet 34 under gravity. (Additionally or alternatively, the water or other heat transfer fluid may be pumped out and/or driven out with compressed air, as described above for the other thermal energy recovery units 1, 22)

Construction of the third thermal energy recovery unit 31 is likely to be simpler than for the other thermal energy recovery units 1, 22, although more care may be needed in its operation. Either approach may thus be used, depending on a balance of other considerations for a particular application.

The systems described above can clearly be adapted for use in conjunction with stationary internal combustion engines (such as electrical generator sets) or even external combustion engines.

Any engine that emits a sizeable flow of hot fluid, the heat from which would otherwise go to waste, can be fitted with a system based on those described above, providing similar benefits.

## Claims

1. Thermal energy storage apparatus (1,22,31) comprising heat input means (10, 11), heat output means (13,16) and thermal store means (9, 29) comprising a thermal energy storage medium, wherein the heat input means (10,11) is operatively connectable to engine means (2) so that a high-temperature fluid from the engine means (2) is delivered to the thermal store means (9, 29) and thermal energy is transferred from the high-temperature fluid to the thermal energy storage medium, ***characterised in that*** the heat output means (13, 16) comprises enclosure means (13) substantially surrounding the thermal store means (9,29), and/or duct means (16) passing through the thermal store means (9,29), a heat transfer fluid being selectably passable through the heat output means (13,16) to absorb thermal energy from the thermal energy storage medium, and said heat output means (13,16) comprises inlet (14) and outlet (15) means operatively connected or connectable to an entity that is to be heated.

2. Thermal storage apparatus (1,22) as claimed in claim 1, ***characterised in that*** the heat input means (10,11) and the heat output means (13,16) are separately operatively connected to the thermal store means (9).

3. Thermal storage apparatus (31) as claimed in claim 1, ***characterised in that*** the heat input means and the heat output means together comprise at least one common portion (30) operatively connected to the thermal store means (29).

4. Thermal energy storage apparatus as claimed in any one of the preceding claims, ***characterised in that*** said apparatus is mountable to a powered vehicle, the heat input means (10,11) is operatively connectable to exhaust means (4,8) of a combustion engine (2) of the vehicle and the high-temperature fluid then comprises exhaust gases from the combustion engine (2).

5. Thermal energy storage apparatus as claimed in claim 4, ***characterised in that*** the entity to be heated comprises an element or portion of the vehicle.

6. Thermal energy storage apparatus as claimed in any one of claims 1 to 4, ***characterised in that*** the entity to be heated comprises a source of heating for a building.

7. Thermal energy storage apparatus as claimed in any one of the preceding claims, ***characterised in that*** the heat transfer fluid is driven through the heat output means (13,16), optionally by pump means.

8. Thermal storage apparatus as claimed in any one of the preceding claims, ***characterised in that*** it comprises a reservoir (19) of said heat transfer fluid, optionally located adjacent the entity to be heated, and means (18) to pass the heat transfer fluid from the reservoir (19) to the heat output means (13,16).

9. Thermal energy storage apparatus as claimed in any one of the preceding claims, ***characterised in that*** the heat transfer fluid is a liquid.

10. Thermal energy storage apparatus as claimed in claim 9, ***characterised in that*** the inlet (14) and outlet (15) means of the heat output means (13,16) are so arranged that said liquid can drain from the heat output means (13,16) under gravity.

11. Thermal energy storage apparatus as claimed in either claim 9 or claim 10, ***characterised in that*** the liquid is removable from the heat output means (13,16) by pumping or by driving it out with compressed air

12. Thermal energy storage apparatus as claimed in any one of the preceding claims, ***characterised in that*** the thermal energy storage medium comprises a phase change material (PCM), optionally comprising a material having a melting point within an operational temperature range of the thermal store means.

13. Thermal energy storage apparatus as claimed in any one of the preceding claims, ***characterised in that*** the heat input means (10,13) comprises selectably operable diversion means (23,24,33) to divert the high-temperature fluid from the engine means (2) away from the thermal store means (9,29).

14. Thermal energy storage apparatus as claimed in claim 13, ***characterised in that*** the diversion means (23,24,33) is automatically operable when a temperature of the thermal store means (9,29) exceeds a current temperature of the high-temperature fluid from the engine means (2), and/or when the thermal store means (9,29) reaches a predetermined temperature.

15. A method of storing and delivering thermal energy, ***characterised in that*** it comprises the steps of providing thermal energy storage apparatus (1,22,31) as claimed in any of the preceding claims; connecting heat input means (10,11) of said apparatus to engine means (2); operating said engine means (2) such that thermal energy from high-temperature fluid from the engine means (2) is transferred to the thermal store means (9,29); passing heat transfer fluid through heat output means (13,16) of the apparatus such that thermal energy is transferred from the thermal store means (9,29) to the heat transfer fluid; and then passing said heat transfer fluid to an entity to be heated.
